# EUROPÄISCHE PATENTSCHRIFT

(11) **EP 1 919 805 B1**
(45) Veröffentlichungstag und Bekanntmachung des Hinweises auf die Patenterteilung: **09.11.2011**
(21) Anmeldenummer: 06776145.2
(22) Anmeldetag: 07.07.2006
(51) Int. Cl.: B65G 47/51, B65G 17/18, B65G 21/14

(54) **DYNAMISCHER SPEICHER FÜR GEGENSTÄNDE**
DYNAMIC MEMORY FOR OBJECTS
MAGASIN DYNAMIQUE DESTINE A DES OBJETS

(30) Priorität: 27.08.2005 DE 202005013552 U
(43) Veröffentlichungstag der Anmeldung: 14.05.2008
(73) Patentinhaber: Krones AG, 93073 Neutraubling (DE)
(72) Erfinder: LANDLER, Bruno, 93073 Neutraubling (DE); HUMELE, Heinz, 93107 Thalmassing (DE); HAUSLADEN, Wolfgang, 93099 Mötzing (DE)
(86) Internationale Anmeldenummer: PCT/EP2006/006648
(87) Internationale Veröffentlichungsnummer: WO 2007/025598

(56) Entgegenhaltungen:
- EP-A- 0 506 551
- WO-A-2005/073113

## Beschreibung

Die Erfindung betrifft einen dynamischen Speicher für Gegenstände gemäß dem Oberbegriff des Anspruchs 1.

Aus der WO 2005/073113 A2 ist bereits ein derartiger Speicher bekannt, bei dem über eine endlose Förderkette, die in ein Leertrum und ein Fördertrum variabel unterteilt ist, mittels eines verfahrbaren Schlittens zur Umlenkung der Trümmer und Veränderung der Speicherkapazität Gegenstände dynamisch gepuffert werden können. Die Gegenstände folgen bei der Speicherung einem spiralförmigen Förderweg und behalten dabei im Wesentlichen ihre Ausrichtung. Nachteilig an dieser Vorrichtung ist der Platzbedarf aufgrund der von den Förderspiralen benötigten Aufstellfläche.

Weiterhin ist ein Speicher bekannt, bei dem auch die unteren Umlenkräder, die gleichzeitig Antriebsräder sind, in senkrechten Ebenen umlaufen und die Förderkette direkt in vier senkrechten Strängen zwischen den beiden unteren und den beiden oberen Umlenkrädern verläuft (EP 506 551 B1). Der Grundflächenbedarf dieses Speichers ist auf Grund der vertikalen Erstreckung der beiden Schleifen trotz großer Speicherkapazität relativ gering. Beim Be- und Entladen der Förderkette sind jedoch die üblicherweise horizontal zu- und abgeführten Gegenstände abrupten Richtungs- und Geschwindigkeitsänderungen unterworfen, so dass keine hohen Leistungen erzielbar sind und eine Beschädigung der Gegenstände nicht auszuschließen ist.

Ferner ist ein dynamischer Speicher für Gegenstände bekannt, bei dem die gegenläufigen Umlenkräder und die damit gebildeten Schleifen eines endlosen Förderbandes in parallelen, horizontalen Ebenen umlaufen (WO 01/98 187 A1). Das Be- und Entladen des horizontalen Fördertrums des Förderbandes bereitet hier keine Probleme; ungünstig ist jedoch der enorme Platzbedarf auf Grund der horizontalen Erstreckung der beiden Schleifen.

Der Erfindung liegt die Aufgabe zu Grunde, bei einem gattungsgemäßen dynamischen Speicher mit geringem Aufwand die Be- und Entladungsmöglichkeiten spürbar zu verbessern.

Diese Aufgabe wird erfindungsgemäß durch die im Anspruch 1 angegebenen Merkmale gelöst.

Bei einem erfindungsgemäßen Speicher wird ohne nennenswerte Vergrößerung der Grundfläche im Bereich der zwei horizontal umlaufenden Umlenkräder eine kontinuierliche Zu- und Abfuhr der Gegenstände in horizontaler Richtung ermöglicht, wobei nach wie vor die eigentliche Speicherung im Bereich der senkrechten Schleifen erfolgt.

Vorteilhafte Weiterbildungen der Erfindung sind in den Unteransprüchen angegeben.

Im Nachstehenden wird ein Ausführungsbeispiel der Erfindung an Hand der Zeichnungen beschrieben. Es zeigen:
- Fig. 1: die Seitenansicht eines dynamischen Speichers
- Fig. 2: die Draufsicht des Speichers nach Fig. 1
- Fig. 3: eine vergrößerte, perspektivische Ansicht der beiden Schleifen des Speichers nach Fig. 1 und 2
- Fig. 4: den Schnitt AB nach Fig. 3.

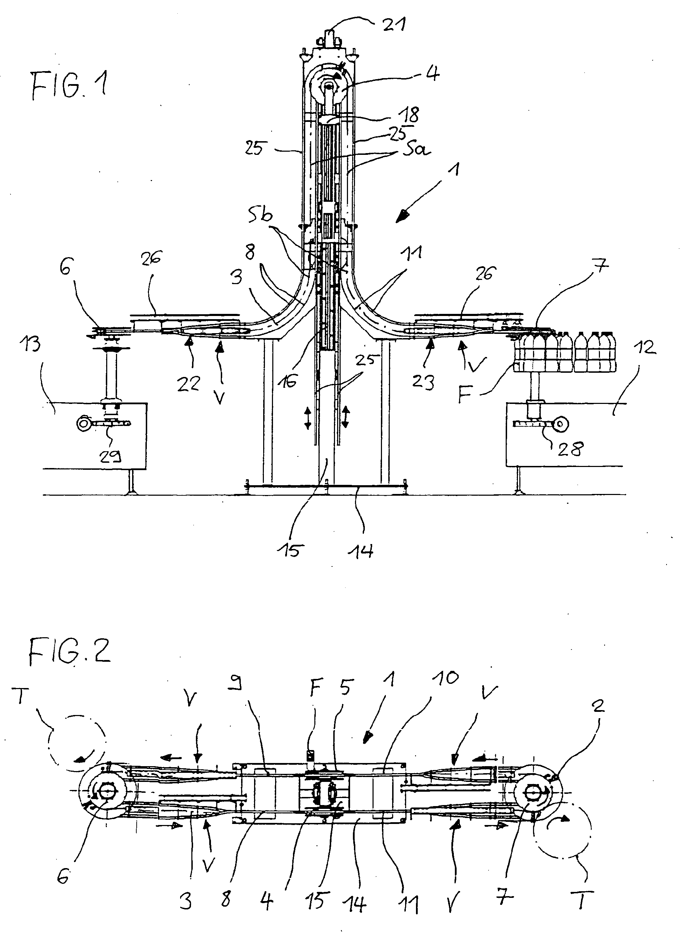

Der Speicher 1 nach Figur 1 bis 4 ist zum dynamischen Puffern und Transportieren von leeren Flaschen F aus PET zwischen zwei Behandlungsmaschinen, z. B. einer Etikettiermaschine 12 und einer Füll- und Verschließmaschine 13, eingerichtet. Er weist eine bodenständige Grundplatte 14 mit einer senkrechten Säule 15 auf, an deren Vorder- und Rückseite jeweils eine senkrechte Linearführung 16, 17 befestigt ist. Auf jeder Linearführung 16, 17 läuft ein rollengelagerter Schlitten 18, 19 mit jeweils einem oberen Umlenkrad 4, 5. Jedes Umlenkrad 4, 5 ist frei drehbar mit horizontaler Drehachse bzw. senkrechter Rotationsebene an dem zugehörigen Schlitten 18, 19 gelagert. Am oberen Ende der Säule 15 ist eine Umlenkrolle 20 mit horizontaler Drehachse frei drehbar gelagert, über die ein Riemen 21 beidseitig nach unten läuft. Das eine Ende des Riemens 21 ist am vorderen Schlitten 18 und das andere Ende ist am hinteren Schlitten 19 befestigt. Eine eventuelle Höhenbewegung der beiden Schlitten 18, 19 und der darauf gelagerten oberen Umlenkräder 4, 5 verläuft somit zwangsweise gegenläufig und synchron.

Auf der Grundplatte 14 sind ferner zwei horizontale Ausleger 22, 23 befestigt, die sich diametral von der Säule 15 weg und zwar jeweils von der zwischen den Linearführungen 16, 17 liegenden Seite weg erstrecken und an ihren freien Enden jeweils ein unteres Umlenkrad 6, 7 mit senkrechter Drehachse bzw. horizontaler Rotationsebene tragen. Die beiden Ausleger 22, 23 bilden zusammen mit der senkrechten Säule 15 ein symmetrisches Kreuz.

Über die beiden unteren Umlenkräder 6, 7 und die beiden oberen Umlenkräder 4, 5 läuft in Pfeilrichtung eine endlose Förderkette 3, von der nur einige Glieder dargestellt sind. Die Glieder sind kardanisch miteinander verbunden und weisen jeweils eine seitliche Aufnahme 2 für eine Flasche F in Form einer elastischen Greifzange auf, welche die Flaschen unterhalb ihres Halskragens kraft- und formschlüssig fixiert. Außerdem ist jedes Kettenglied mit vier Führungsrollen 24 versehen, deren Funktion weiter unten erläutert wird.

Zusätzlich zu den vier Umlenkrädern 4 bis 7 wird die Förderkette 3 durch vier bogenförmige Führungen 8 bis 11 nach Art eines Viertelkreises geführt, die jeweils paarweise und - von vorn gesehen- deckungsgleich im oberen Zwickel zwischen der senkrechten Säule 15 und den horizontalen Auslegern 22, 23 angeordnet sind. Dabei liegen die beiden vorderen Führungen 8 und 11 in der gleichen senkrechten Ebene, in der auch das vordere, obere Umlenkrad 4 umläuft. Entsprechend liegen die beiden hinteren Führungen 9 und 10 in der gleichen senkrechten Ebene, in der auch das hintere obere Umlenkrad 5 umläuft. Die beiden Ebenen liegen parallel zueinander mit einem Abstand, der dem horizontalen Abstand der beiden oberen Umlenkräder 4, 5 entspricht. In diesen beiden Ebenen wird die Förderkette 3 durch die vorderen Führungen 8 und 11 und das vordere obere Umlenkrad 4 in einer vorderen senkrechten Schleife Sa und durch die hinteren Führungen 9, 10 und das hintere obere Umlenkrad 5 in einer hinteren senkrechten Schleife Sb geführt.

Der Abstand zwischen den beiden Ebenen mit den Schleifen Sa, Sb entspricht im Ausführungsbeispiel in etwa dem Durchmesser der unteren Umlenkräder 6, 7 die wiederum in einer gemeinsamen horizontalen Ebene liegen, in der die Förderkette 3 mittels der unteren Umlenkräder 6, 7 zwischen den beiden senkrechten Ebenen überführt wird. Zwischen den Führungen 8 bis 11 und den unteren Umlenkrädern 6, 7 durchläuft die Förderkette 3 jeweils ein kurzes horizontales Stück, das mit der eigentlichen dynamischen Speicherfunktion nichts zu tun hat, sondern den vorgegebenen Abstand zwischen der Etikettiermaschine 12 und der Füll- und Verschließmaschine 13 überbrückt. Diese geradlinigen Stücke können auch entfallen. Außerdem können sie, wie beim Ausführungsbeispiel, als Verwindungsstrecken V ausgebildet sein, um die räumliche Ausrichtung der Förderkette 3 um beispielsweise 90° zu verändern. Beim Ausführungsbeispiel wird dies dazu genutzt, um die Flaschen F im Bereich der senkrechten Schleifen Sa, Sb mit horizontaler Mittelachse und im horizontalen Bereich ihres Transportwegs mit senkrechter Mittelachse zu befördern. Dies hat den Vorzug, das die Flaschen F im Bereich der unteren Umlenkräder 6, 7 in ihrer Normalposition durch übliche Transportmittel wie Transportsterne T mit gesteuerten Klammern zu- und abgeführt werden können, welche die Flaschen F in die elastischen Aufnahmen 2 hineindrücken bzw. aus diesen herausziehen. Um ein Flattern der Förderkette 3 im Bereich zwischen den Umlenkrädern und Führungen zu verhindern, können paarweise angeordnete senkrechte bzw. horizontale Führungsstangen 25 vorgesehen werden, die von den Führungsrollen 24 der Kettenglieder umfasst werden. Die Führungsstangen 25 sind feststehend angeordnet, mit Ausnahme der inneren, senkrechten Führungsstangen 25 im Bereich der beiden Schleifen Sa, Sb. Diese sind paarweise am zugehörigen Schlitten 18, 19 befestigt und machen somit dessen Höhenbewegung mit (angedeutet durch Doppelpfeile). Die Führungen 8 bis 11 sind zur Erhöhung der Stabilität aus massiven Profilen geformt und bilden zusammen mit den angrenzenden Führungsstangen 25 und deren Tragprofilen 26 die Ausleger 22, 23. Sie sind an ihren oberen Stirnseiten mit rinnenartigen Vertiefungen 27 versehen, in die die höhenbeweglichen Führungsstangen 25 eingreifen.

Die unteren Umlenkräder 6, 7 sind gleichzeitig die Antriebsräder für die Förderkette 3. Hierzu ist das Umlenkrad 7 über ein Getriebe 28 mit dem Antrieb der Etikettiermaschine 12 verbunden oder es weist einen eigenen Motor auf, der synchron zur Etikettiermaschine 12 läuft. Dementsprechend ist das Umlenkrad 6 über ein Getriebe 29 mit dem Antrieb der Füll- und Verschließmaschine 13 verbunden oder es weist einen eigenen Motor auf, der synchron zu Füll- und Verschließmaschine 13 läuft.

Im normalen Betrieb, wenn Etikettiermaschine 12 und Füll- und Verschließmaschine 13 mit gleicher Leistung arbeiten, laufen die unteren Umlenkräder 6, 7 in Pfeilrichtung mit der gleichen Geschwindigkeit um. Die oberen Umlenkräder 4, 5 halten ihre momentane Position ein. Die etikettierten Flaschen F werden in aufrechter Normalposition durch den Auslaufstern T der Reihe nach in die Aufnahmen 2 der Förderkette 3 eingedrückt, werden im Bereich des rechten Auslegers 23 um 90° in eine horizontale Position gewendet, durchlaufen die hintere Schleife Sb in horizontaler Position, werden im Bereich des linken Auslegers 22 zurück in ihre senkrechte Normalposition gewendet und schließlich durch den Einlaufstern T der Füll- und Verschließmaschine 13, der mit nicht gezeigten Greifelementen versehen ist, der Reihe nach aus den Aufnahmen 2 der Förderkette 3 entnommen. Das Leertrum der Förderkette 3 läuft anschließend im umgekehrten Sinne über die vordere Schleife Sa zurück zum Umlenkrad 7.

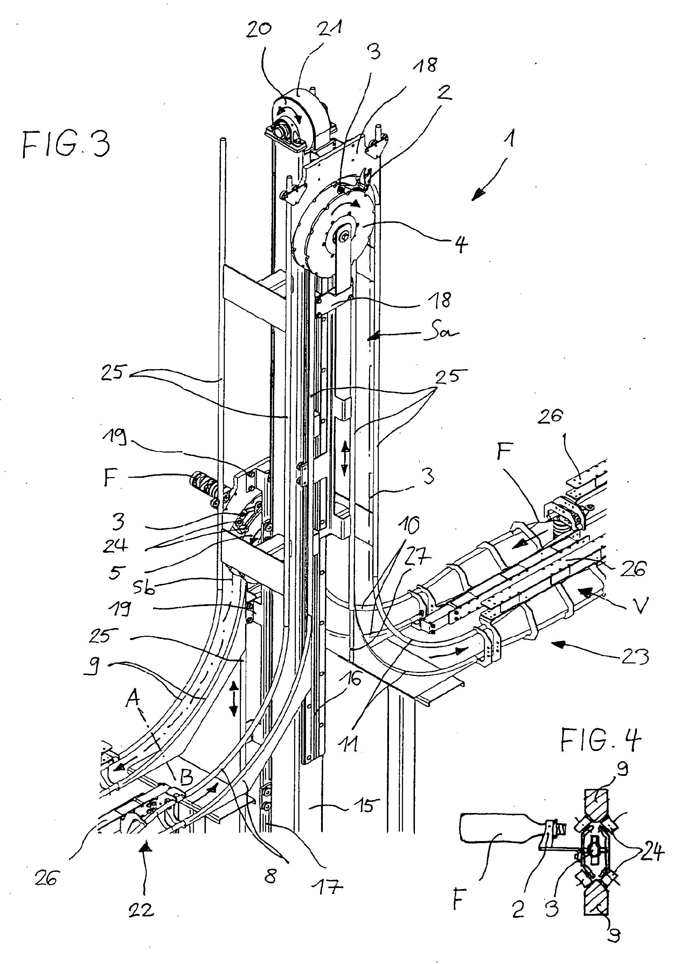

Laufen die unteren Umlenkräder 6, 7 auf Grund unterschiedlicher Leistung von Etikettiermaschine 12 und Füll- und Verschließmaschine 13 mit unterschiedlicher Geschwindigkeit, so verändern sich selbsttätig die Längen der beiden Schleifen Sa und Sb im gegenläufigen Sinne und die Anzahl der Flaschen F in der hinteren Schleife Sb wird größer oder kleiner. Die Leistungsunterschiede von Etikettiermaschine 12 und Füll- und Verschließmaschine 13 werden hiermit dynamisch gepuffert. Entsprechendes passiert beim Stillstand eines der beiden unteren Umlenkräder 6, 7 auf Grund eines Stopps von Etikettiermaschine 12 oder Füll- und Verschließmaschine 13. In beiden Fällen wird die dynamische Speicherkapazität durch die Differenz zwischen der minimalen und der maximalen Länge der Förderkette 3 bzw. der Anzahl der Aufnahmen 2 der hinteren Schleife Sb definiert. Bevorzugt wird die hintere Schleife Sb im Normalbetrieb im Bereich der minimalen Länge gefahren, so dass bei einem plötzlichen Stop der Füll- und Verschließmaschine 13 die Etikettiermaschine 12 problemlos leergefahren werden kann, bevor auch sie angehalten wird. Dabei fährt der hintere Schlitten 19 mit dem Umlenkrad 5 aus der in Fig. 1 und 3 gezeigten unteren Position in seine obere Position und der vordere Schlitten 18 mit dem Umlenkrad 4 umgekehrt aus seiner oberen in die untere Position.

## Patentansprüche

1. Dynamischer Speicher (1) für Gegenstände (F), mit einer endlosen, mit Aufnahmen (2) für die Gegenstände bestückten Förderkette (3), mit mindestens zwei gegenläufig höhenbeweglichen oberen Umlenkrädern (4, 5) und mit mindestens zwei stationären unteren Umlenkrädern (6, 7), wobei die Förderkette zwei im Wesentlichen senkrechte Schleifen (Sa, Sb) bildet, deren variable Länge durch die oberen Umlenkräder definiert wird und die unteren Umlenkräder (6, 7) in im Wesentlichen horizontalen Ebenen umlaufen und durch bogenförmige Führungen (8, 9, 10, 11) für die Förderkette (3) mit den im Wesentlichen senkrechten Schleifen (Sa, Sb) verbunden sind, **dadurch gekennzeichnet, dass** die Führungen (8, 9, 10, 11) jeweils in der gleichen senkrechten Ebene angeordnet sind wie die zugehörige Schleife (Sa, Sb).

2. Dynamischer Speicher nach Anspruch 1, **dadurch gekennzeichnet, dass** die unteren Umlenkräder (6, 7) in der gleichen horizontalen Ebene umlaufen.

3. Dynamischer Speicher nach einem der Ansprüche 1 bis 2, **dadurch gekennzeichnet, dass** zwischen die unteren Umlenkräder (6, 7) und die bogenförmigen Führungen (8, 9, 10, 11) Verwindungsstrecken (V) für die Förderkette (3) eingefügt sind.

4. Dynamischer Speicher nach einem der Ansprüche 1 bis 3, **dadurch gekennzeichnet, dass** an höhenbeweglichen Schlitten (18, 19), an denen die oberen Umlenkräder (4, 5) frei drehbar gelagert sind, senkrechte Führungsstangen (25) für die Förderkette (3) befestigt sind.

5. Dynamischer Speicher nach einem der Ansprüche 1 bis 4, **dadurch gekennzeichnet, dass** die Förderkette (3) mehrere kardanisch zueinander bewegliche Glieder aufweist, von denen jedes eine Aufnahme (2) und vier Führungsrollen (24) aufweist, die die Führungen (8, 9, 10, 11) und ggf. die Führungsstangen (25) paarweise umgreifen.

6. Dynamischer Speicher nach einem der Ansprüche 1 bis 5, **dadurch gekennzeichnet, dass** die Aufnahmen (2) als elastische Halsgreifer für die flaschenförmigen Gegenstände (F) ausgebildet sind.

7. Dynamischer Speicher nach Anspruch 5, **dadurch gekennzeichnet, dass** die Förderkette (3) im Bereich der Schleife (Sb) derart geführt ist, dass die Mittelachsen der flaschenförmigen Gegenstände (F) im Wesentlichen horizontal ausgerichtet sind.

8. Dynamischer Speicher nach Anspruch 6 oder 7, **dadurch gekennzeichnet, dass** die Förderkette (3) im Bereich der unteren Umlenkräder (6, 7) derart geführt ist, dass die Mittelachsen der flaschenförmigen Gegenstände (G) im Wesentlichen senkrecht ausgerichtet sind.

## Claims

1. Dynamic storage (1) for objects (F), comprising an endless conveyor chain (3) equipped with receptacles (2) for the objects, at least two upper counter-rotating, vertically adjustable deflection wheels (4, 5) and at least two lower stationary deflection wheels (6, 7), the conveyor chain forming two substantially vertical loops (Sa, Sb), the variable length of which is defined by the upper deflection wheels, and the lower deflection wheels (6, 7) rotating in substantially horizontal planes and being connected to the substantially vertical loops (Sa, Sb) by arcuate guides (8, 9, 10, 11) for the conveyor chain (3), **characterized in that** the guides (8, 9, 10, 11) are in each case arranged in the same vertical plane as the respective loop (Sa, Sb).

2. Dynamic storage according to Claim 1, **characterized in that** the lower deflection wheels (6, 7) rotate in the same horizontal plane.

3. Dynamic storage according to one of Claims 1 or 2, **characterized in that** interposed between the lower deflection wheels (6, 7) and the arcuate guides (8, 9, 10, 11) there are twisting sections (V) for the conveyor chain (3).

4. Dynamic storage according to one of Claims 1 to 3, **characterized in that** vertical guide rods (25) for the conveyor chain (3) are attached to vertically adjustable sliding carriages (18, 19), on which the upper deflection wheels (4, 5) are mounted in such a way as to be freely rotatable.

5. Dynamic storage according to one of Claims 1 to 4, **characterized in that** the conveyor chain (3) has a plurality of links which are movable relative to one another via Cardan joints, each link having a receptacle (2) and four guide rollers (24) which engage in pairs with the guides (8, 9, 10, 11) and possibly with the guide rods (25).

6. Dynamic storage according to one of Claims 1 to 5, **characterized in that** the receptacles (2) take the form of resilient devices for gripping the necks of the bottle-shaped objects (F).

7. Dynamic storage according to Claim 5, **characterized in that** the conveyor chain (3) is guided in the region of the loop (Sb) in such a way that the central axes of the bottle-shaped objects (F) are aligned in a substantially horizontal direction.

8. Dynamic storage according to Claim 6 or 7, **characterized in that** the conveyor chain (3) is guided in the region of the lower deflection wheels (6, 7) in such a way that the central axes of the bottle-shaped objects (F) are aligned in a substantially vertical direction.

## Revendications

1. Magasin dynamique (1) pour des objets (F) ayant une chaîne transporteuse (3), sans fin, ayant des moyens de réception (2) pour les objets, au moins deux roues de renvoi (4, 5) supérieures, mobiles en hauteur de façon opposée et au moins deux roues de renvoi (6, 7), inférieures, fixes,
* la chaîne transporteuse formant deux boucles (Sa, Sb) essentiellement verticales dont la longueur variable est définie par les roues de renvoi supérieures, les roues de renvoi inférieures (6, 7) tournant dans des plans essentiellement horizontaux et par des guides (8, 9, 10, 11) en forme d'arc pour la chaîne transporteuse (3), reliés aux boucles (Sa, Sb) essentiellement verticales,
magasin **caractérisé en ce que**
les guides (8, 9, 10, 11) sont situés chacun dans le même plan vertical que la boucle (Sa, Sb) correspondante.

2. Magasin dynamique selon la revendication 1,
**caractérisé en ce que**
les roues de renvoi inférieures (6, 7) tournent dans le même plan horizontal.

3. Magasin dynamique selon l'une des revendications 1 et 2,
**caractérisé par**
des chemins de liaison (V) pour la chaîne transporteuse (3) prévus entre les roues de renvoi inférieures (6, 7) et les guides (8, 9, 10, 11) en forme d'arc.

4. Magasin dynamique selon l'une des revendications 1 à 3,
**caractérisé en ce que**
des chariots (18, 19) mobiles en hauteur et portant librement à rotation les roues de renvoi supérieures (4, 5), comportent des tiges de guidage (25) verticales pour la chaîne transporteuse (3).

5. Magasin dynamique selon l'une des revendications 1 à 4,
**caractérisé en ce que**
la chaîne transporteuse (3) comporte plusieurs maillons mobiles les uns par rapport aux autres par une liaison par cardan, et chacun comporte un moyen de réception (2) et quatre galets de guidage (24) qui entourent par paires les guides (8, 9, 10, 11) et le cas échéant les barres de guidage (25).

6. Magasin dynamique selon l'une des revendications 1 à 5,
**caractérisé en ce que**
les moyens de réception (2) sont des pinces élastiques à col pour des objets (F) en forme de bouteilles.

7. Magasin dynamique selon la revendication 5,
**caractérisé en ce que**
dans la zone de la boucle (Sb), la chaîne transporteuse (3) est guidée de façon que l'axe des objets (F) en forme de bouteilles, soit dirigé pratiquement horizontalement.

8. Magasin dynamique selon l'une des revendications 6 ou 7,
**caractérisé en ce que**
dans la zone des roues de renvoi inférieures (6, 7), la chaîne transporteuse (3) est guidée pour que l'axe des objets (G) en forme de bouteilles, soit dirigé pratiquement verticalement.
